# EUROPEAN PATENT APPLICATION

(11) **EP 3 101 156 A1**
(43) Date of publication of application: **07.12.2016**
(21) Application number: 14880615.1
(22) Date of filing: 04.11.2014
(51) Int. Cl.: C23C 18/54, F24J 2/46, F24J 2/48

(54) **COATING THAT SELECTIVELY ABSORBS RADIATION, AND METHOD THEREOF FOR ACHIEVING AMBIENT TEMPERATURE**

(30) Priority: 29.01.2014 MX 2014001213
(71) Applicant: Energia, Suministros e Instalaciones, S.A. De C.V., Quintana Roo 77028 (MX)
(72) Inventor: CAMACHO PÉREZ, Juan Manuel, Quintana Roo 77028 (MX); RIOS FLORES, Araceli, Quintana Roo 77028 (MX); MARFIL RIVERO, Michel, Quintana Roo 77028 (MX); ROCHA ARGÜELLES, Fátima Guadalupe, Quintana Roo 77028 (MX)
(74) Representative: Hamilton, Alistair
(86) International application number: PCT/MX2014/000173
(87) International publication number: WO 2015/115883

(57) **Abstract**

The instant invention relates to thermal applications. More specifically, it relates to coatings applied on metals, used for harnessing solar radiation or artificial illumination. The object of this coating is to improve the efficacy of solar energy collection, maximizing visible light harnessing and minimizing heat emission in the metal. The procedure including the composition and obtainment of the solar absorbing coating operating in the low and medium temperature range from 25°C to 300°C, and that can be used in devices generating heat through solar radiation or artificial illumination is described.

## Description

### FIELD OF THE INVENTION

The instant invention relates to thermal applications. More specifically, it relates to a selective absorbing coating used on metal, employed for harnessing solar energy and converting it into thermal energy. The object of said coating is to improve the efficiency in the collection of thermal energy, optimizing visible light harnessing and minimizing heat emission in the metal.

### OBJECT OF THE INVENTION

The object of the instant invention is to present a process for obtaining a solar radiation selective absorbing coating at room temperature operating in the low and medium temperature range from 25°C to 300°C that can be applied on devices generating heat through solar radiation or artificial illumination. It also relates to different uses and applications that can be given to it.

### BACKGROUND OF THE INVENTION

The object of the selective absorbing coatings is to increase the efficiency of solar collectors and are generally used in thermosolar applications. Said coatings have a large power of absorption of solar energy and low emissivity characteristics in order to reduce energy losses through thermal radiation in the remote infrared region. Whatever their application, the selective absorbing coatings play an essential part. There are two magnitudes denominated absorbance (α) in the UV_VIS (200-1000 nm) region and emittance (ε) in the infrared (1-15 µm) region for evaluating the efficiency of selective absorbing coatings. The greater α and the smaller ε, the higher is the efficacy of the coating.

The selective coatings for the efficient absorption of solar energy and its conversion into heat are characterized because they have a reflectance spectrum that changes abruptly in the wavelength where the intensity of solar radiation is nil (about 2 µm), from a very low value (about 5%) to a very high value (greater than 90%) above this wavelength corresponding to the infrared region of the spectrum. This ensures that the heat acquired by the metallic element is not lot lost through thermal radiation.

Several patents and patent applications related to solar selective coatings are known. Usually, the coatings are made of a metal, dielectric or ceramic material substrate, at least one reflecting metallic layer and at least one anti-reflection layer and their direct application is in absorbing pipes for parabolic-trough solar collectors and in absorbing sheets for solar panels, such as in patents ES2316321B2, ES2317796B2 and patent application WO2012172148A1. The main advantage is an absorbance greater than 95% and an emittance lower than 0.2 in the temperature range from 400°C to 550°C. However, their compositions and methods of obtainment are very complex and thus would not be economically sound in industries such as: food, textile, among others, because of their high production costs and thus the high price of the final product.

Specifically, the inventions described in patents ES2317796B2 or ES2316321 B2, report very acceptable absorbance values but their emittance values are not so favorable, leading to a selectivity ratio α/ε ≤ 10.
Particularly, a large number of selective coatings have been described that use cermets formed by some of the following metals: Cu, Ni, Co, Pt, Cr, Mo, W, Al or Ag; and as ceramic matrix, the following compounds: SiO, SiO₂, Al₂O₃, AlN or MgO. In order to improve their efficacy, these cermets must be covered with a layer of a material having very good transparent qualities such as the following oxides: Cr₂O₃, MoO₃, WOₓ, H_{f}Oₓ or SiO₂, where said layer acts as anti-reflection layer. Additionally, the cermet must be deposited on the metal acting as infrared mirror, usually Ag, Cu, Al, Au or Pt.

Contrary to other patents, the working temperature of the instant invention ranges from room temperature to 200°C. The manufacturing costs are reduced and it is useful for use in other types of industries and for applications where high working temperatures are not required.

The instant invention does not consist of multiple layers and very good reflection and anti-reflection results are obtained simultaneously.

### BRIEF DESCRIPTION OF THE FIGURES

Figure 1: Cross section of a coating consisting of a substrate (1) of metallic material and metallic layer (2), in this example it is a cross section of a coated metallic pipe. It represents the cross section of a coating consisting of a substrate (1) of metallic material and a radiation absorbing layer (2); and
Figure 2. Reflectance value obtained with the coating.

### DETAILED DESCRIPTION OF THE INVENTION

The instant invention is characterized because it consists of a radiation selective absorbing coating and a process for obtaining said coating.

The instant invention is characterized because it presents a procedure for obtaining a solar radiation selective absorbing coating at room temperature using a stripping procedure.

Said coating consists of a substrate (1) of metallic material, that may include, without limitation, dielectric or ceramic characteristics, and one single metallic layer (2) with reflection and anti-reflection characteristics applied to the substrate (1) providing low emittance properties and having various uses, for example as solar selective absorbent on metal surfaces or metal substrates, as well as thermosolar applications, including, without limitation, in the food industry, in the production processes, or a textile product such as a fabric or thread to be used in patches or inserts in the textile industry.

Said substrate (1) of metallic material may have surfaces of various configurations and textures including, without limitation, smooth, rough, pipes, sheets, wires, filaments, spheres, etc.

For the above mentioned uses and applications, the solar radiation selective absorbing coating operates within a low and medium temperature range, from room temperature (25°C) to 300°C, appropriate for being used in devices generating heat through solar radiation or artificial illumination. Moreover, it is applied for heating water or any other liquid.

The proposed invention also comprises a process contemplating at least one cleaning stage, at least one first stage of immersion and standing in aqueous solution, at least one first rinsing stage, at least one second stage of immersion in aqueous solution and at least one second rinsing stage.

The proposed invention relates to a procedure for obtaining a solar radiation selective coating using a stripping procedure, the procedure contemplates at least one cleaning stage, one stripping process (immersion and standing in aqueous solution), at least one first rinsing stage, at least one stage of immersion in aqueous solution and at least one second rinsing stage.

In said cleaning stage, the metal surface to be coated is cleaned with solvents that include, without limitation, the following substances.

A mixture of silicates, phosphates, carbonates and sulfates, to remove impurities such as dust and some greases;
Trichloroethylene for removing greases and oils that may be present on the metal surface;
Acetone, for removing inorganic greases and polymer coverings that are different from oxides.

After the cleaning stage, the substrate is immersed for the first time in a hydrofluoric acid aqueous solution at a concentration ranging from 0% to 5% plus nitric acid at a concentration ranging from 5% to 15%.

After the cleaning stage, the substrate is submitted to a stripping process in a hydrofluoric acid aqueous solution at a concentration ranging from 0% to 5% plus nitric acid at a concentration ranging from 5% to 15%. In a period of time from 8 to 16 minutes, the surface to be coated is allowed to stand immersed in the solution. Then, the water rinsing stage is conducted (distilled water may be used).

Afterwards, in the second immersion stage, the substrate is immersed during 9 to 13 hours in a chromic acid aqueous solution at a concentration ranging from 200 g/L to 300 g/L and sulfuric acid at a concentration ranging from 350 g/L to 450 g/L, obtaining an optimum coating within 9.5 and 10.5 hours. This coating is generated in the indicated ranges at room temperature, between 20°C and 40°C, and at a humidity ranging from 0% RH to 80% RH, because above this range water precipitation would be generated in the solution.

Then, the pre-treated substrate is immersed during a period of 9 to 13 hours in a chromic acid aqueous solution at a concentration ranging from 200 g/L to 300 g/L and sulfuric acid at a concentration ranging from 350 g/L to 450 g/L, obtaining an optimum coating between 9.5 and 10.5 hours. This coating is generated applying the indicated ranges at room temperature, between 20°C and 40°C, and at a humidity ranging from 0% RH to 80% RH because above this range water precipitation would be generated in the solution.

Finally, the substrate with the coating is withdrawn and is submitted to a rinsing stage that can be conducted with water or with an impurity removing liquid. Then, the metal substrate (1) is coated with one sole layer (2) of chromium oxide having simultaneously reflecting and anti-reflecting characteristics.

The absorption level in the wavelength of 0.25 to 1.0 µm is 89%, the reflectance level in the wavelength of 2 to 15 µm is 21%.

The thickness of the layer of chromium oxide obtained is 200 nm.

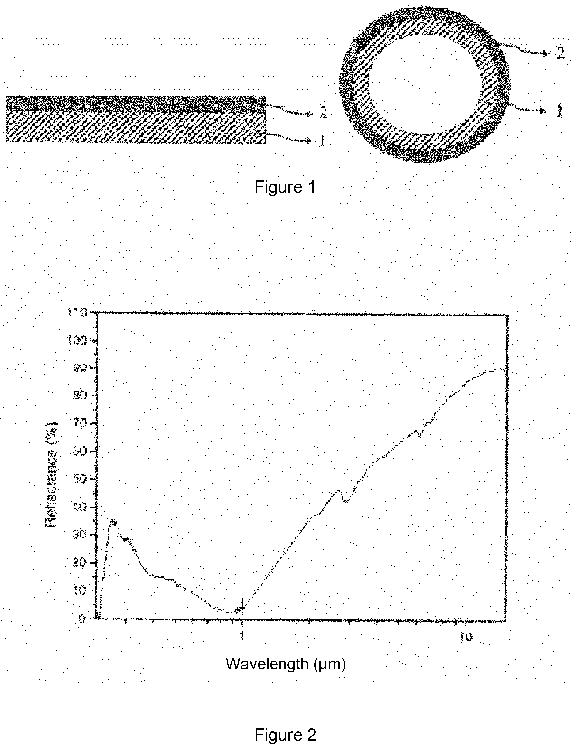

The tests conducted on the selective absorbing coating with a typical Ni/NiO generate a high reflectance spectrum such as the one shown in Figure 2.

As it can be observed, the instant invention has the advantage of being a simple process that however has not been previously used for solving situations of cost reduction implemented in industries where process heat is required in the manufacturing process and where fossil fuels are mainly used, and it is thus considered a novelty for its simplicity and the good technical results it permits to obtain.

Another advantage is that solvents and solutions necessary for obtaining it can be reused, optimizing thus the use of these inputs.

### PREFERRED EMBODIMENT OF THE INVENTION

The procedure may use an additional polishing process in order to improve the coating, considering that the sheets, pipes and spheres may be polished; however, if this additional step is not used, such as in the case of wires or metal fibers, this does not drastically reduce the absorbance values.

The use of acetone is not mandatory is this procedure; this component permits to ensure the cleanliness of the metal substrate (1) but does not affect the obtained efficacy values.

Having clearly and sufficiently described my invention, I consider that it is a novelty and claim as my exclusive property the contents of the following claims:

## Claims

1. A radiation selective absorbing coating and process for obtaining same at room temperature, consisting of a metal substrate and at least one metallic layer, characterized because said metallic layer possesses reflecting and anti-reflecting characteristics and its process of obtainment includes a stripping process, formed by a metal substrate and at least one metallic layer, characterized because said metallic layer has reflecting and anti-reflecting characteristics.

2. The radiation selective absorbing coating and process for obtaining same at room temperature, characterized because it is obtained through a process contemplating at least one cleaning stage, at least one stripping process, at least one first rinsing stage, at least one second stage of immersion in aqueous solution and at least one second rinsing stage.

3. The radiation selective absorbing coating and process for obtaining same at room temperature, according to claim 1, further characterized because said metallic material may have surfaces of various configurations and textures including, without limitation, smooth, rough, pipes, sheets, wires, filaments, spheres, etc.

4. The radiation selective absorbing coating and process for obtaining same at room temperature, according to claim 1, further characterized because said metallic layer consists of chromium oxide.

5. The radiation selective absorbing coating and process for obtaining same at room temperature, according to claim 2, further characterized because said stages are conducted at room temperature between 20°C and 40°C and within a humidity ranging from 0% RH to 80% RH.

6. The radiation selective absorbing coating and process for obtaining same at room temperature, according to claim 2, further characterized because in the cleaning stage, the metal surface is covered with solvents that include, without limitation, a mixture of silicates, phosphates, carbonates and sulfates, trichloroethylene and acetone.

7. The radiation selective absorbing coating and process for obtaining same at room temperature, according to claim 6, further characterized because the cleaning stage may or may not use acetone.

8. The radiation selective absorbing coating and process for obtaining same at room temperature, according to claim 2, further characterized because in the first immersion stage, the aqueous solution is hydrofluoric acid at a concentration ranging from 0% to 5% plus nitric acid at a concentration ranging from 5% to 15%.

9. The radiation selective absorbing coating and process for obtaining same at room temperature, according to claims 2 and 8, further characterized because in the standing stage, the surface to be coated is immersed during 8 to 16 minutes.

10. The radiation selective absorbing coating and process for obtaining same at room temperature, according to claim 2, further characterized because the first and second rinsing stages are conducted with water or with an impurity removing liquid.

11. The radiation selective absorbing coating and process for obtaining same at room temperature, according to claim 2, further characterized because in the second immersion stage, the aqueous solution is chromium acid at a concentration ranging from 200 g/L to 300 g/L and sulfuric acid at a concentration ranging from 350 g/L and 450 g/L and it is immersed during 9 to 13 hours.

12. The radiation selective absorbing coating and process for obtaining same at room temperature, according to claim 2, further characterized because the rinsing stage is conducted with water or an impurity removing liquid.

13. The radiation selective absorbing coating and process for obtaining same at room temperature, according to claim 2, further characterized because the solvents and the solutions are reused.

14. The radiation selective absorbing coating and process for obtaining same at room temperature, according to claims 1 and 2, further characterized because the radiation selective absorbing coating operates at a low and medium temperature ranging from 25°C to 300°C.

15. The radiation selective absorbing coating and process for obtaining same at room temperature, according to claims 1 and 2, further characterized because it can be applied to any device generating heat through solar radiation or artificial illumination.

16. The radiation selective absorbing coating and process for obtaining same at room temperature, according to claims 1 and 2, further characterized because it is used in thermosolar applications, including, without limitation, in the food industry, in production processes or as a textile product such as fabric or thread to be used in patches or inserts in the textile industry.

17. The radiation selective absorbing coating and process for obtaining same at room temperature, according to claims 1 and 2, further characterized because it is used for heating water and any other liquid in any industry where process heat is required.

18. The radiation selective absorbing coating and process for obtaining same at room temperature, according to claims 1 and 2, further characterized because a polishing process is not previously required.

19. The radiation selective absorbing coating and process for obtaining same at room temperature, according to claims 1 and 2, further characterized because the level of absorption in the wavelength ranging from 0.25 to 1.0 µm is 89%.

20. The radiation selective absorbing coating and process for obtaining same at room temperature, according to claims 1 and 2, further characterized because the reflectance level in the wavelength ranging from 2 to 15 µm is 21%.

21. The radiation selective absorbing coating and process for obtaining same at room temperature, according to claims 1 and 2, further characterized because the thickness of the chromium oxide film obtained is 200 nm.
